Europäisches Patentamt

European Patent Office

Office européen des brevets

(11) Numéro de publication: **0 178 544 B1**

# (12) FASCICULE DE BREVET EUROPEEN

(45) Date de publication de fascicule du brevet: **13.05.92** (51) Int. Cl.⁵: **B23H 7/04**

(21) Numéro de dépôt: **85112518.7**

(22) Date de dépôt: **03.10.85**

(54) **Alimentation sélective d'un fil à éroder par étincelles.**

(30) Priorité: **17.10.84 CH 4997/84**

(43) Date de publication de la demande:
**23.04.86 Bulletin 86/17**

(45) Mention de la délivrance du brevet:
**13.05.92 Bulletin 92/20**

(84) Etats contractants désignés:
**DE FR GB IT**

(56) Documents cités:
**DE-A- 3 327 470**

**PATENT ABSTRACTS OF JAPAN, vol. 8, no. 152 (M-309)[1589], 14 juillet 1984; & JP-A-59 47 123 (INOUE JAPAX KENKYUSHO K.K.) 16-03-1984**

(73) Titulaire: **CHARMILLES TECHNOLOGIES S.A. rue du Pré-de-la-Fontaine 8-10 CH-1242 Satigny(CH)**

(72) Inventeur: **Briffod, Jean Paul Les Cavelines chez Degradaz F-74380 Lucinges(FR)**
Inventeur: **Martin, Roland Bloux F-74520 Dingy-en-Vuache(FR)**

(74) Mandataire: **Blum, Rudolf Emil Ernst et al c/o E. Blum & Co Patentanwälte Vorderberg 11 CH-8044 Zürich(CH)**

## Description

Sur une machine à découper par étincelage érosif une pièce au moyen d'un fil, la vitesse de découpe est limitée par les contraintes thermiques exercées sur le fil au cours de l'usinage. Ces contraintes sont dues d'une part à la chaleur dégagée par chaque étincelle et d'autre part à l'effet Joule du courant d'usinage circulant le long du fil. Une partie importante de la chaleur produite au cours de l'usinage est évacuée par le liquide d'usinage qui circule entre le fil et la piéce; toutefois cette dissipation de chaleur a des limites. La seule source de chaleur sur laquelle il est possible d'agir pour augmenter la vitesse d'usinage est celle produite par l'effet Joule.

On sait que la puissance dissipée dépend de l'endroit où se produit l'étincelle le long de la zone d'usinage, cette puissance étant minimale lorsque l'étincelle se produit à une extrémité de cette zone et maximale lorsqu'elle se produit au milieu de cette zone. Cependant, lorsque l'étincelle se produit à proximité de l'une des extrémités, la portion de courant amenée par l'autre extrémité produit un échauffement inutile du fil.

Le brevet japonais A 59-47 123 décrit un dispositif dans lequel le fil -électrode est alimenté en courant électrique par deux contacts situés de part et d'autre de la zone d'usinage. Il propose d'alterner l'amenée du courant par l'un ou l'autre de ces contacts avec une fréquence inférieure à celle des impulsions d'usinage. Ceci permet un refroidissement relatif de chacune des moitiés de la zone d'usinage pendant la demi-période où le courant et amené par l'autre extrémité de cette zone, mais ne réduit que faiblement la perte thermique globale.

On sait également que lorsque l'étincelage s'effectue normalement, la répartition des décharges dans la fente d'usinage comprise entre les électrodes se fait de façon aléatoire. Cependant, on peut constater qu'il se produit souvent une concentration de ces décharges en un point particulier du fil, ce qui peut provoquer une rupture du fil due à un échauffement local excessif de celui-ci ainsi qu'un accroissement des décharges anormales. Il est donc très utile de pouvoir détecter une telle concentration des décharges afin de pouvoir éviter cette rupture en agissant suffisamment rapidement sur des paramètres d'usinage tels que la puissance des décharges ou l'injection du fluide d'usinage. Un dispositif permettant de détecter la position des étincelles, de mettre en évidence une concentration de ces dernières et d'agir en régulant certains paramètres, telle l'énergie des décharges, est décrit dans l'un des brevets US 4 329 558 ou EP 136 975 de la déposante.

Citons aussi le dispositif décrit dans DE 33 27 470 permettant de détecter une concentration des décharges en un point du fil et de réguler l'énergie des impulsions afin que cette concentration ne dépasse pas un seuil de référence. Mais l'amenée de courant ne se fait que par un contact et il est donc impossible de l'alterner par l'une ou l'autre des extrémités de la zone d'usinage.

L'invention a pour but de réduire les pertes dues à une production de chaleur parasite. Elle permet aussi d'éviter un échauffement local exagéré par accumulation des étincelles et des défauts d'étincelage en un endroit donné du fil. A cet effet, l'invention est définie comme il est dit aux revendications 1 et 4. On ne se contente plus d'agir sur un paramètre lorsqu'on détecte une concentration anormale d'étincelles en un endroit du fil, ceci indépendamment de la position de cet endroit. Pour chaque étincelle, on réalise une sélection du côté où se fait l'amenée de courant en relation avec la position de l'étincelle, de manière à réduire l'échauffement du fil par effet Joule, plus particulièrement dans la zone centrale, qui est la moins bien refroidie.

L'invention sera maintenant illustrée par la description de modes de réalisation et à l'aide du dessin, dans lequel

la fig. 1 montre schématiquement le circuit d'alimentation du premier mode de réalisation du dispositif selon l'invention,

la fig. 2 est un diagramme illustrant la répartition le long du fil de la puissance dissipée sous forme de chaleur dans ce mode de réalisation,

la fig. 3 montre pour quelles positions de l'étincelle chacun des switchs (éléments de commutation) est conducteur ou non conducteur,

les fig. 4 - 6 et 8 montrent schématiquement les circuits d'alimentation de trois autres modes de réalisation, et

la fig. 7 illustre la répartition le long du fil de la puissance dissipée sous forme de chaleur dans la réalisation de la fig. 6.

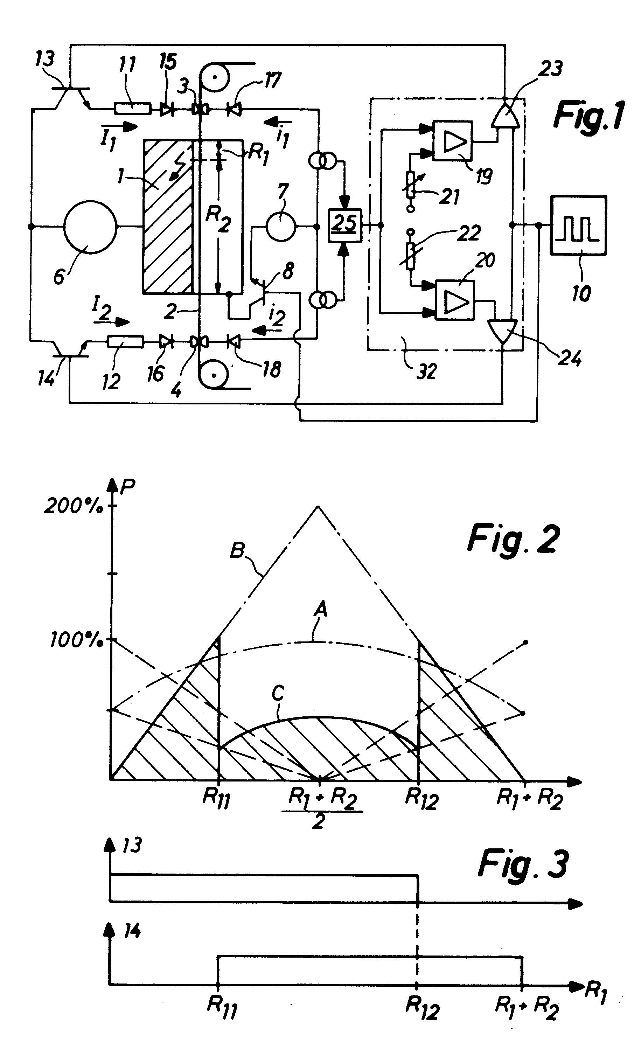

Dans la fig. 1 une pièce 1 est découpée par un fil 2 qui défile entre deux guides 3, 4. Le générateur d'impulsions comporte deux circuits alimentés chacun par une source de courant 6,7 ayant une de ses bornes connectée à la pièce et l'autre connectée aux deux contacts d'amenée de courant sur le fil. Une première source de courant 7, et son switch 8 commandé par une base de temps 10, est destinée à l'amorçage d'une étincelle de faible courant.

Une seconde source de courant 6 est destinée à transformer l'étincelle amorcée par la première source en une étincelle de puissance traversée par le courant d'usinage. Cette seconde source de puissance est reliée à chaque contact 3, 4 d'amenée de courant sur le fil par l'intermédiaire d'un switch 13, 14 ce qui permet d'alimenter la zone d'étincelage par l'une de ses extrémités lorsque seul le switch 13 est conducteur ou par l'autre de ses extrémités si seul le switch 14 est conducteur. Lorsque les deux switchs sont conducteurs, l'amenée de courant se fait des deux côtés de la pièce par II et I2. Les impédances de lignes sont représentées par 11 et 12 et des diodes 15-18 sont prévues dans les lignes de manière à empêcher le passage du courant de l'une des sources dans le circuit de l'autre source.

Les deux guides du fil et les contacts d'amenée du courant sur ce fil sont représentés par le même dispositif 3,4 de manière à simplifier le dessin.

La position de l'étincelle le long de la zone d'usinage est détectée lors de l'amorçage de l'étincelle basse puissance en mesurant les courants i1 et i2 produits par la première source 7 et en traitant ces grandeurs dans un circuit 25, par exemple en calculant la différence entre ces courants, comme il est décrit dans les brevets EP 136 975 et US - 4.329.558. Le signe de l'écart entre ces courants indique dans quelle moitié de la zone d'usinage se produit l'étincelle et sa valeur absolue est une mesure de la position de l'étincelle. Dans le circuit logique 32 cet écart est comparé à deux grandeurs de référence matérialisées par les résistances variables 21, 22 et représentant une première et une seconde position de référence de l'étincelle dans la zone d'étincelage. Lorsque l'étincelle se produit entre une des extrémités de la zone d'étincelage et la première position de référence l'amplificateur 19 correspondant émet un signal qui permet au moyen d'une porte ET 23 de faire passer le signal de la base de temps 10 vers le switch 13 de manière à le rendre conducteur. Ce même signal avait été utilisé pour rendre conducteur le switch 8 du circuit d'amorçage à partir duquel une mesure de la position de l'étincelle a été faite. Grâce à l'amplificateur 20 et à la porte 24, on obtient de la même manière la fermeture du switch 14 si l'étincelle se produit entre l'autre extrémité de la zone d'étincelage et la seconde position de référence. En revanche, si l'étincelle se produit entre les deux positions de référence, les deux switchs 13 et 14 seront simultanément conducteurs.

La figure 2 illustre la répartition de la puissance dissipée dans le fil lorsque l'alimentation en courant de la zone d'étincelage se fait, selon l'invention, d'une manière sélective. $R_{11}$ et $R_{12}$ représentent les première et seconde positions de référence déterminées par les résistances 21 et 22.

La position d'une étincelle est représentée en abscisse par la résistance R1 du fil entre une extrémité de la zone d'usinage et l'étincelle, la résistance du fil entre la même étincelle et l'autre extrémité étant égale à R2. La puissance relative P dissipée dans le fil varie selon la fonction A si l'arrivée de courant se fait aux deux extrémités de la zone d'usinage, elle est maximale au milieu de cette zone et minimale aux deux extrémités. Si l'arrivée de courant se fait d'un seul côté, cette puissance varie linéairement selon la droite B jusqu'au milieu de la zone.

Si l'amenée de courant est faite, selon l'invention, d'une manière sélective en relation avec la position de l'étincelle comme le montre l'exemple de la Figure 3, le switch 14 sera ouvert lorsque l'étincelle se produira entre l'extrémité de la zone et la première position et fermé à partir de cette position. L'autre switch 13 sera fermé jusqu'à la seconde position et ouvert entre cette position et l'autre extrémité de la zone.

Le nombre d'étincelles produites pendant un laps de temps déterminé sera le même dans toutes les parties de la zone d'usinage. En revanche, la puissance dissipée le long du fil, qui est proportionnelle à ce nombre de décharges, correspond au segment de droite B lorsqu'un seul switch amène le courant dans la zone d'usinage, mais ne peut plus être représenté par la fonction A lorsque les deus switchs sont conducteurs, entre R11 et R12. En effet, à chaque fois qu'une étincelle se produit dans l'une ou l'autre des zones extrêmes délimitées respectivement par R11 et R12 aucun courant ne passe dans la zone centrale de sorte que la puissance dissipée dans cette zone pendant le même laps de temps sera réduite proportionnellement à la longueur R11-R12 de cette zone, de sorte que la fonction A devient une fonction C dont la valeur est réduite dans les mêmes proportions. L'énergie totale dissipée dans le fil pendant ledit laps de temps est représentée par les surfaces délimitées par le segment de droite B dans les zones extrêmes et la fonction C dans la zone centrale. On constate dans l'exemple de la figure 2 que dans les parties extrêmes de la zone d'usinage qui sont les mieux refroidies la puissance dissipée n'a pas beaucoup diminué; en revanche, dans la partie centrale qui est moins bien refroidie la diminution de la puissance dissipée est beaucoup plus importante. Le contraire peut se produire si on rapproche les positions de référence R11 et R12 des extrémités.

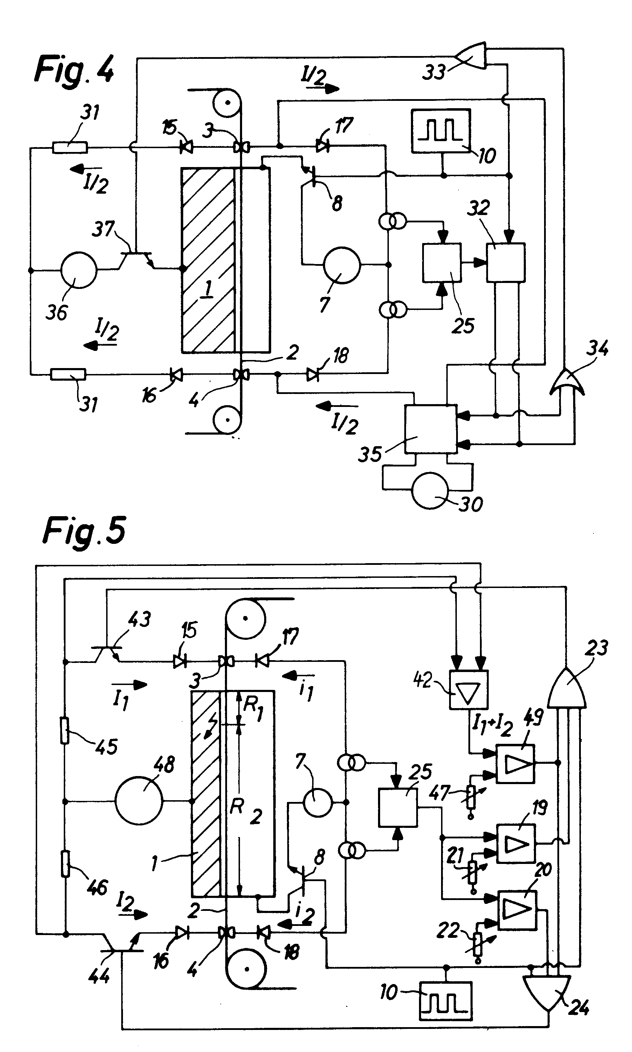

La figure 4 montre une autre forme de réalisation de l'invention dans le cas où la source de courant 6 de la figure 1 est remplacée par une source de tension 36 et où des résistances de limitation de courant 31 sont beaucoup plus grandes que la résistance totale du fil de manière à faire passer la moitié du courant d'usinage dans chaque ligne d'amenée de courant quelle que soit la position de l'étincelle le long du fil. Dans ce cas, l'effet sélectif des switches de la figure 1 est obtenu par un circuit auxiliaire alimenté par une source de courant 30 qui fait passer le long du fil un courant égal à la moitié du courant d'usinage de manière à annuler le courant dans une partie du fil. Ce circuit comporte un inverseur 35 permettant de choisir l'extrémité de la zone d'étincelage par laquelle arrive le courant. L'inverseur 35 est commandé par un circuit logique 32 identique à celui de la figure 1. Le switch 37 du circuit de puissance est synchronisé avec la base de temps 10 par une porte "ET" 33 qui laisse passer le signal de commande d'une porte "OU" 34 dès qu'un signal de sélection est élaboré par le circuit logique 32.

La figure 5 montre une autre variante de l'invention qui comporte un générateur d'amorçage 7 avec détection de la position de l'étincelle comme dans le cas de la figure 1 et un générateur de tension 48 connecté de chaque côté de la zone d'étincelage par l'intermédiaire des switch 43,44. La sélection des amenées de courant est obtenue toujours au moyen du même aiguillage, cependant chaque switch 43, 44 a en plus une autre fonction qui consiste à maintenir le courant d'étincelle constant quelle que soit l'endroit où se produit l'étincelle. En effet, en l'absence de cette fonction le courant d'étincelle varie si la source de tension 48 est reliée au fil par des lignes dont l'impédance est du même ordre de grandeur que celle du fil. Dans ce cas, les courants $I_1$ et $I_2$ alimentant la zone d'étincelage sont mesurés respectivement par les shunts 45 et 46 et l'écart entre la somme des ces courants (réalisée par l'organe 42) et une référence 47 est amplifié par un organe 49 de réglage, relié aux portes 23 et 24, de manière à maintenir le courant moyen d'étincelle à la valeur de cette référence par une oscillation à haute fréquence de chacun des switchs produite pendant chaque impulsion de courant.

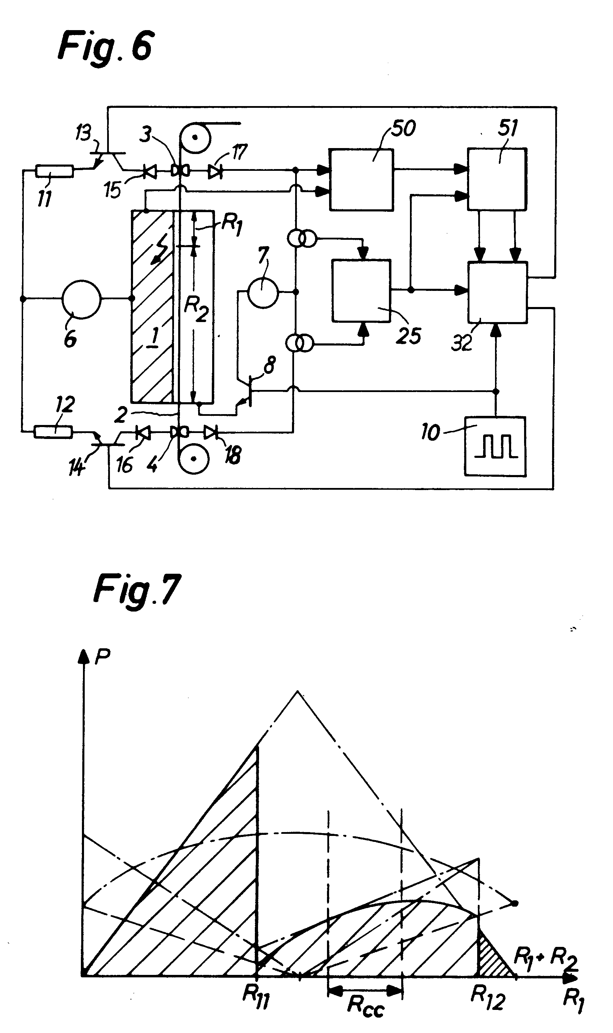

La figure 6 concerne une réalisation de l'invention destinée à améliorer les contraintes thermiques exercées sur le fil. Le schéma fonctionnel de l'installation diffère de celui de la figure 1 par le fait que les positions de référence sont modifiées automatiquement en relation avec une zone où l'étincelage est perturbé, par exemple par une fréquence élevée de court-circuits. Pour détecter l'endroit de cette zone perturbée, on utilise un signal élaboré par un circuit 50 indiquant un défaut d'étincelage et le signal élaboré par le circuit 25 indiquant l'endroit de ce défaut. Ces signaux commandent un circuit de réglage de position 51 qui modifie les valeurs de référence de manière à maintenir la zone perturbée entre ces deux valeurs de référence.

La figure 7 illustre le cas où des perturbations sont détectées dans une zone Rcc où les valeurs de référence R11 et R12 ont été déplacées en conséquence. De cette manière, la zone perturbée Rcc se trouve à un endroit de la zone d'étincelage où la puissance dissipée est la plus faible, ce qui permet d'éviter une surcharge thermique du fil et un risque de rupture.

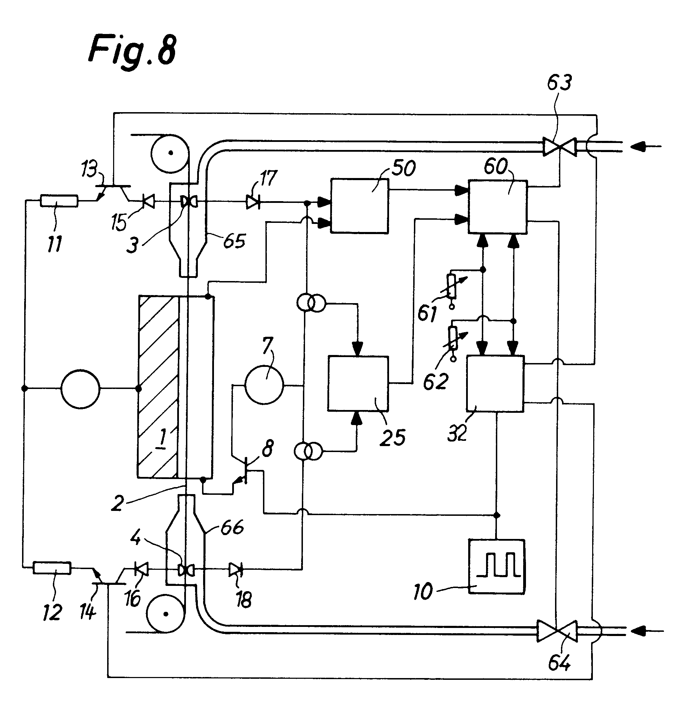

La figure 8 montre une autre réalisation de l'invention pour éviter des contraintes thermiques sur le fil trop élevées à l'endroit où se produisent des court-circuits. L'installation comprend les mêmes éléments que ceux de la figure 6, mais dans ce cas, un paramètre d'usinage, par exemple la pression d'injection du liquide d'usinage dans la zone d'étincelage, est réglé au moyen d'un circuit de réglage 60, dont les deux grandeurs de sortie commandent respectivement des vannes 63 et 64 destinées à contrôler la pression du liquide d'usinage injecté à chaque extrémité de la zone d'étincelage, grâce aux buses 65 et 66.

**Revendications**

1. Procédé pour découper par étincelage érosif une pièce électrode (1), dans lequel, pour amener le courant d'usinage sur le fil-électrode (2), on prévoit deux contacts (3,4) placés aux deux extrémités de la zone d'usinage s'étendant le long de ce fil (2) et comprise entre ce dernier et la pièce (1) à usiner et dans lequel on détecte la position de chaque étincelle le long de cette zone, caractérisé par le fait que cette détection est réalisée par rapport à deux positions de références définies dans cette zone d'usinage et que le courant est amené, soit par l'une seulement des extrémités de la zone d'usinage lorsque la position de l'étincelle est située entre cette extrémité et la position de référence la plus proche, soit par les deux extrémités de cette zone si l'étincelle éclate entre les deux positions de référence.

2. Procédé selon la revendication 1 selon lequel on détecte l'endroit où s'accumulent des étincelles ou des défauts d'étincelage et on fait varier au moins l'une desdites positions de référence de manière à ce que ces positions encadrent ledit endroit.

3. Procédé selon la revendication 1 selon lequel on injecte du fluide sous pression de chaque côté de la zone d'usinage, on détecte l'endroit où s'accumulent des étincelles ou des défauts d'étincelage et on varie le rapport des pressions d'injection de manière à amener l'endroit où s'accumulent les défauts d'usinage entre lesdites positions de référence.

4. Dispositif pour découper par étincelage érosif une pièce électrode (1) au moyen d'un fil électrode (2), comportant un circuit électronique détectant l'endroit où se produit chaque décharge le long de la zone d'usinage, deux lignes électriques pour amener le courant d'usinage sur le fil (2) de chaque côté de la zone d'usinage et un générateur d'impulsions, caractérisé par le fait que ce circuit détecteur (25,32) est agencé pour détecter cette position par rapport à deux positions de références et pilote des organes de commutation (13, 14, 35, 43, 44) placés entre la source ou l'une des sources (6,30, 48) du générateur et les contacts (3,4) de manière à faire arriver sélectivement le courant par l'un ou l'autre des contacts ou par les deux.

5. Dispositif selon la revendication 4, caractérisé par le fait que la source (30) est une source auxiliaire émettant un courant égal à la moitié du courant d'usinage émis par la source principale (36) du générateur et que les organes de communication font partie d'un inverseur (35).

6. Dispositif selon la revendication 4, caractérisé par des organes de commutations (43,44) capables d'osciller à haute fréquence en réponse au signal émis par un circuit de réglage (49), permettant de maintenir le courant d'usinage à une valeur constante et prédéterminée.

7. Dispositif selon la revendication 4 comportant un circuit (50) élaborant un signal indiquant un défaut d'étincelage et un circuit (51) modifiant les positions de référence en réponse à ce signal et à celui émis par le détecteur de localisation (25), pour que ces nouvelles valeurs de références encadrent la zone perturbée.

8. Dispositif selon la revendication 4 comportant un circuit (50) élaborant un signal indiquant des conditions anormales d'étincelage et des moyens (60, 63, 64) contrôlant la pression avec laquelle un fluide d'usinage est injecté de chaque côté de la zone d'usinage en réponse à ce signal et à celui émis par le détecteur de localisation (25).

**Claims**

1. A method for cutting by electrical discharges a workpiece (1) which acts as an electrode, wherein the machining current is supplied to the wire electrode (2) through two contacts (3,4), each placed at one end of a machining zone which stretches along said wire (2) and extends between it and the workpiece (1) to be machined, said method comprising the detection of the position of each spark along said machining zone, characterized in that the detection is performed relative to two reference points situated in the machining zone, and that the current is supplied either via only one end of the machining zone when the spark is located between this end and the reference point nearest to it, or else via both ends of said zone when the spark occurs between both reference points.

2. The method according to claim 1, wherein one detects the location where sparks or misfirings accumulate and shifts at least one of said reference points, such that the reference points come to lie on opposite sides of said location.

3. The method according to claim 1, wherein one supplies pressurized fluid at each end of the machining zone, one detects the location where sparks or misfirings accumulate, and modifies the ratio between the pressures at which fluid is injected so that the location of the machining errors comes to lie between said reference points.

4. Device for cutting by electrical discharges a workpiece (1) acting as an electrode by means of a wire electrode (2), comprising an electronic circuit which detects the location along the machining zone where each discharge occurs, two electrical conductors for supplying the machining current to the wire (2) at each end of the machining zone, and a pulse generator, characterized in that the detecting circuit (25, 32) is able to detect the position of said location with respect to two reference points, and that it commands switching means (13, 14, 35, 43, 44) situated between the source, or one of the sources (6, 30, 48), of the generator and the contacts (3, 4), in order to selectively supply the current through one or the other contact, or through both contacts.

5. Device according to claim 4, characterized in that the source (30) is an auxiliary source which emits a current equal to half the current emitted by the main source (36) of the generator, and that the switching means are part of an inverter (35).

6. Device according to claim 4, characterized in that it comprises switching means (43, 44) which can oscillate at high frequency when commanded by a signal emitted by a regulating circuit (49) in order to maintain the machining current at a constant, predetermined value.

**7.** Device according to claim 4, characterized in that it comprises a circuit (50) which generates a signal that indicates a sparking disturbance and a circuit (51) which, in response to this signal and to the signal emitted by the location detector (25), modifies the reference points such that their new positions lie on both sides of the disturbed region.

**8.** Device according to claim 4, comprising a circuit (50) that generates a signal which indicates abnormal sparking, and means (60, 63, 64) which regulate the pressure under which machining fluid is injected at each end of the machining zone in response to said signal and to the signal emitted by the location detector (25).

**Patentansprüche**

**1.** Verfahren um ein Elektrodenwerkstück (1) mittels Funkenerosion zu schneiden, bei dem man für die Zuführung des Verarbeitungsstromes zum Elektrodendraht (2) zwei Kontakte (3, 4) vorsieht, die an beiden Enden der sich längs dieses Drahtes (2) erstreckenden und zwischen demselben und dem zu verarbeitenden Werkstück (1) befindlichen Arbeitszone liegen, und bei dem man die Lage jedes Funkens längs dieser Arbeitszone abtastet, dadurch gekennzeichnet, dass dieses Abtasten bezüglich zweier innerhalb der Arbeitszone befindlichen Bezugspunkte stattfindet, dass die Stromzuführung nur über das eine Ende der Arbeitszone geschieht, falls der Funken zwischen diesem Ende und dem ihm am nächsten liegenden Bezugspunkt auftritt, und dass die Stromzuführung über beide Enden dieser Zone geschieht, falls der Funken zwischen den beiden Bezugspunkten auftritt.

**2.** Verfahren nach Anspruch 1, wobei man die Stelle feststellt, an welcher sich Funken oder Fehlzündungen häufen, und wobei man mindestens eine der besagten Bezugspunkte so verschiebt, dass sich letztere beidseits von besagter Stelle befinden.

**3.** Verfahren nach Anspruch 1, wobei man an beiden Enden der Verarbeitungszone eine unter Druck stehende Flüssigkeit einspritzt, die Stelle an der sich Funken oder Fehlzündungen anhäufen bestimmt, und das Verhältnis der Einspritzdrucke so ändert, dass die Häufungsstelle der Verarbeitungsfehler zwischen die Bezugspunkte zu liegen kommt.

**4.** Vorrichtung um ein Elektrodenwerkstück (1) durch Funkenerosion mittels eines Elektrodendrahtes (2) zu schneiden, mit einer elektronischen Schaltung, welche den Ort längs der Arbeitszone feststellt, wo jede Entladung stattfindet, mit zwei elektrischen Leitungen um den elektrischen Strom dem Draht (2) an jedem Ende der Arbeitszone zuzuführen, und mit einem Impulsgenerator, dadurch gekennzeichnet, dass die elektronische Schaltung (25, 32) eingerichtet ist, um die Lage besagten Ortes bezüglich zwei Bezugspunkten zu bestimmen, und dass sie zwischen der Quelle oder einer der Quellen (6, 30, 48) des Generators und den Kontakten (3, 4) befindliche Schaltungs-Organe (13, 14, 35, 43, 44) so steuert, dass der Strom wahlweise über den einen oder den anderen Kontakt, oder über beide, einfliesst.

**5.** Vorrrichtung nach Anspruch 4, dadurch gekennzeichnet, dass die Quelle (30) eine Hilfsquelle ist, die einen Strom erzeugt der halb so gross ist wie der von der Hauptquelle (36) des Generators erzeugte Verarbeitungsstrom, und dass die Schaltorgane Teile eines Umrichters (35) sind.

**6.** Vorrichtung nach Anspruch 4, dadurch gekennzeichnet, dass die Schaltorgane (43, 44) in Abhängigkeit eines von einer Regelschaltung (49) abgegebenen Signals hochfrequent schwingen können, wodurch der Verarbeitungsstrom auf einem konstanten, vorbestimmten Wert gehalten werden kann.

**7.** Vorrichtung nach Anspruch 4, mit einer Schaltung (50) zum Erzeugen eines Verarbeitungsfehler anzeigenden Signals, und mit einer Schaltung (51) welche in Abhängigkeit desselben sowie des durch die ortsbestimmende Schaltung (25) abgegebenen Signals die Lage der Bezugspunkte so ändert, dass deren neue Lagen beidseits des gestörten Bereiches liegen.

**8.** Vorrichtung nach Anspruch 4, mit einer Schaltung (50) zur Erzeugung eines Signals das ein abnormales Funken anzeigt, und mit Mitteln (60, 63, 64), welche in Abhängigkeit dieses Signals und des durch die ortsbestimmende Schaltung (25) erzeugten Signals den Druck steuern, mit dem eine Verarbeitungsflüssigkeit an beiden Enden der Verarbeitungszone eingespritzt wird.

Fig.1

Fig. 2

Fig. 3

# Fig.4

# Fig.5

# Fig. 6

# Fig. 7

# Fig.8